# EUROPÄISCHE PATENTANMELDUNG

(11) **EP 0 765 826 A1**
(43) Veröffentlichungstag der Anmeldung: **02.04.1997**
(21) Anmeldenummer: 96113796.5
(22) Anmeldetag: 29.08.1996
(51) Int. Cl.: B65G 47/61, B65G 47/88

(54) **Verfahren zum Fördern von auf Bügeln hängendem Fördergut und Vorrichtung zur Verwendung in dem Verfahren**

(30) Priorität: 29.09.1995 DE 19536313
(71) Anmelder: DÜRKOPP ADLER AKTIENGESELLSCHAFT, D-33719 Bielefeld (DE)
(72) Erfinder: Blattner, Thomas, 33659 Bielefeld (DE); Diekmann, Thomas, 32107 Bad Salzuflen (DE); Goldbeck, Siegfried, 33334 Gütersloh (DE); Janzen, Paul, 33609 Bielefeld (DE); Kuhnt, Frank, 33613 Bielefeld (DE); Lüke, Martin, 33758 Schloss Holte (DE); Kuhlmann, Dirk, 33719 Bielefeld (DE); Petermeier, Uwe, 33803 Steinhagen (DE); Zahn, Thomas, 33689 Bielefeld (DE); Niesen, Klaus, 33611 Bielefeld (DE)
(74) Vertreter: Rehmann, Klaus-Thorsten, Dipl.-Ing.

(57) **Zusammenfassung**

Ein Verfahren zum Fördern von auf Bügel hängendem Fördergut, insbesondere Kleidungsstücke, wobei das Fördergut von einem Aufgabebereich I in einen Förderbereich II und von dort in einen Abgabebereich III transportiert wird, zeichnet sich durch folgende Schritte aus:
a) Bilden von Griffeinheiten (4) durch Zusammenfassen mehrerer einzelner Fördergüter (4') zu Gruppen gleicher oder unterschiedlicher Größe und Festlegen einer theoretischen Maximallänge für eine Griffeinheit (4),
b) Zählen eines im Förderbereich (II) erzeugten Taktes,
c) Aufstauen der Griffeinheiten im Aufgabebereich (I),
d) Vereinzeln der Griffeinheiten (4) zur Ausbildung definierter Abstände zwischen ihnen und Fördern der vereinzelten Griffeinheit (4) vor den Förderbereich (II),
e) Prüfen, ob im Förderbereich (II) eine ausreichend große Lücke zum Einschleusen der vorgeförderten Griffeinheit (4) vorhanden ist, unter Zugrundelegung der festgelegten Maximallänge und Zählen der Takte zur Bestimmung der Länge der Lücke,
f) Einschleusen der Griffeinheit (4) in die nächste ausreichend große Lücke im Förderbereich (II),
g) Festlegen des im Förderbereich (II) zurückzulegenden Weges der Griffeinheit (4),
h) Verfolgen des Weges jeder in den Förderbereich (II) eingeschleusten Griffeinheit (4) durch Fortzählen der Takte und
i) Ausschleusen der Griffeinheit (4) in den Abgabebereich (III), wenn die Taktzählung ergibt, daß der festgelegte Weg zurückgelegt wurde, indem die Anschleusstelle (A) geschlossen wird und in Abhängigkeit der Länge ausgeschleusten Griffeinheit (4) geschlossen bleibt.

## Beschreibung

Die Erfindung betrifft ein Verfahren zum Fördern von auf Bügel hängendem Fördergut, insbesondere Kleidungsstücke, wobei das Fördergut von einem Aufgabebereich in einen Förderbereich und von dort in einen Abgabebereich transportiert wird, sowie Vorrichtungen zur Verwendung in dem Verfahren.

Aus der US-PS 4,909,373 ist ein Verfahren zum Fördern von Kleidungsstücken oder ähnlichem bekannt, bei dem die Bügelhaken während des Transports in einzelne Fördertaschen eingehängt sind, an vorgesehenen Ausschleusstellen aus der Fördertasche abgeworfen werden und entlang einer Gleitstange in den Abgabebereich rutschen. Die Kapazität einer derartig betriebenen Hängeförderanlage ist allein deshalb begrenzt, weil immer nur ein Kleiderbügelhaken in jede Fördertasche eingehängt werden kann. Eine Kapazitätssteigerung ist nur durch Erhöhung der Transportgeschwindigkeit und/oder Verringerung des Abstandes zwischen den einzelnen Fördertaschen möglich.

Es sind auch Förderanlagen bekannt, bei denen als Förderträger sogenannte Trolleys eingesetzt werden, die entlang einer Schiene laufen und eine Mehrzahl von Kleiderbügeln aufnehmen können. Diese Trolleys sind für eine maximale Kapazität aufzunehmender Bügel ausgelegt. Auch wenn wesentlich weniger Fördergut transportiert wird, als wofür die Trolleys ausgelegt sind, wird eine entsprechend lange Förderstrecke benötigt und die Tranportdauer vom Einschleusen des Förderguts in den Förderbereich bis zum Ausschleusen in den Abgabebereich dauert entsprechend lang, wodurch die Kapazität einer solchen Förderanlage ebenfalls begrenzt ist. Darüberhinaus sind Trolley-Förderanlagen konstruktiv recht aufwendig.

Von dieser Problemstellung ausgehend soll ein gattungsgemäßes Verfahren so fortgebildet werden, daß die Durchlaufkapazität des Förderers bei zumindest gleichbleibender Sicherheit wesentlich erhöht und der konstruktive Aufwand der Förderanlage reduziert wird.

Zur Problemlösung ist das Verfahren gekennzeichnet durch folgende Schritte:
a) Bilden von Griffeinheiten durch Zusammenfassen mehrerer einzelner Fördergüter zu Gruppen gleicher oder unterschiedlicher Größe und Festlegen einer theoretischen Maximallänge für eine Griffeinheit,
b) Zählen eines im Förderbereich erzeugten Taktes,
c) Aufstauen der Griffeinheiten im Aufgabebereich,
d) Vereinzeln der Griffeinheiten zur Ausbildung definierter Abstände zwischen ihnen und Fördern der vereinzelten Griffeinheit vor den Förderbereich,
e) Prüfen, ob im Förderbereich eine ausreichend große Lücke zum Einschleusen der vorgeförderten Griffeinheit vorhanden ist, unter Zugrundelegung der festgelegten Maximallänge und Zählen der Takte zur Bestimmung der Länge der Lücke,
f) Einschleusen der Griffeinheit in die nächste ausreichend große Lücke im Förderbereich,
g) Festlegen des im Förderbereich zurückzulegenden Weges der Griffeinheit,
h) Verfolgen des Weges jeder in den Förderbereich eingeschleusten Griffeinheit durch Fortzählen der Takte und
i) Ausschleusen der Griffeinheit in den Abgabebereich, wenn die Taktzählung ergibt, daß der festgelegte Weg zurückgelegt wurde, indem die Anschleusstelle geschlossen wird und in Abhängigkeit der Länge ausgeschleusten Griffeinheit geschlossen bleibt.

Durch die Zusammenfassung von Griffeinheiten ist es möglich, das einer Abgabestelle zugeordnete Fördergut zusammenhängend zu transportieren, wobei die Griffeinheiten von unterschiedlicher Größe sein können, so daß der von ihnen benötigte Platzbedarf im Förderstrang optimal ausgenutzt werden kann. Zur Bildung der Griffeinheiten werden die einzelnen Bügelhaken zusammengefaßt und beispielsweise mit Klebeband zusammengehalten, das dann, wenn die Griffeinheit ausgeschleust bzw. beim Endabnehmer angelangt ist, einfach wieder aufgetrennt werden kann. Es ist möglich, jedwede gewünschte Kommission zu einer Griffeinheit zusammenzustellen. Diese kann kundenbezogen, fördergutbezogen, also beispielsweise bestimmte Kleidungsstücke, Kleidungsstücke einer bestimmten Größe, Farbe oder ähnlichem oder aber auch personenbezogen zusammengestellt sein, nämlich maximal so groß, daß sie von dem Bedienpersonal als eine Einheit ergriffen und getragen werden können, sofern im Abgabebereich anschließend manuell weitergearbeitet werden sollte. Zwischen einzelnen Griffeinheiten kann im Förderer auch einzelnes Fördergut transportiert werden, weil zwischen den Griffeinheiten definierte Abstände eingehalten sind und festgelegt ist, wie weit die Griffeinheit oder das entsprechend behandelte einzelne Fördergut im Förderbereich transportiert werden muß.

Zur Erzeugung eines Taktes im Förderbereich werden regelmäßig wiederkehrende Punkte im umlaufenden Förderer detektiert. Hierzu werden beispielsweise die einzelnen endlos zusammengesetzten Förderelemente markiert, so daß sie über eine Lichtschranke oder ähnliches erkennbar sind. Je enger der Abstand zwischen den zu detektierenden regelmäßig vorhandenen Punkten ist, umso exakter ist die Wegverfolgung und die Einstellung der definierten Abstände zwischen den Griffeinheiten möglich.

Durch den in der Förderanlage selbst erzeugten regelmäßigen Takt kann die Länge einer Förderstrecke durch eine bestimmte Anzahl von Takten definiert werden, wobei die Anzahl abhängig ist von dem Abstand der einzelnen an der Meßstelle detektierten umlaufenden Fixpunkte. Dadurch ist die Wegverfolgung für jede einzelne Griffeinheit gewährleistet. Die Wegstrecke zwischen einer Aufgabestelle und einer Abgabestelle ist - wie erläutert - durch die Anzahl bestimmter Takte festgelegt. Da bekannt ist, an welcher Stelle eine eingeschleuste Griffeinheit aus dem Förderbereich wieder ausgeschleust werden soll, muß nur die Anzahl der Takte gezählt werden, die erzeugt werden, während die Griffeinheit transportiert wird. Ist die festgelegte Anzahl von Takten erreicht, wird zum Ausschleusen der Griffeinheit die entsprechende Ausschleusstelle geschlossen und bleibt genau so lange zu, bis die Griffeinheit vollständig die Ausschleusstelle passiert hat, um dann sofort wieder zu öffnen, damit nachfolgende Griffeinheiten oder Einzelteile diese Ausschleusstelle gegebenenfalls passieren können, um an der für sie vorgesehenen nachfolgenden Ausschleusstelle aus dem Förderbereich in den Abgabebereich zu gelangen.

Die Längenmessung der Griffeinheit kann beispielsweise direkt an der Ausschleusstelle mittels einer Lichtschranke erfolgen. Denkbar ist auch, die Länge der Griffeinheit bei der Aufgabe in den Förderbereich in Abhängigkeit von den erzeugten Takten zu erfassen und durch Taktzählung die Ausschleusstelle entsprechend ausreichend lange geschlossen zu halten.

Vorteilhaft ist, wenn jede Griffeinheit codiert und im Förderbereich die Codierung zum Zwecke der Zielzuordnung gelesen wird. Dadurch kann die Förderanlage weiter automatisiert werden.

Um den Ausschleusvorgang an sich zu beschleunigen ist es insbesondere vorteilhaft, wenn grundsätzlich an jeder Ausschleusstelle die Griffeinheiten aus dem Förderträger ausgehoben werden, unabhängig davon, ob sie an dieser Stelle ausgeschleust werden sollen oder nicht. Griffeinheiten, die nicht ausgeschleust werden sollen, werden hinter der Ausschleusstelle wieder in den Förderträger zurückgeführt. Durch diese Maßnahme ist jede Griffeinheit für den Ausschleusvorgang optimal konditioniert. Es können dann auf einfache Art und Weise in bzw. an der Ausschleusstelle unabhängig vom Förderträger Weichen geschaltet werden, da zwischen dem Fördergut und dem Förderträger keine formschlüssige Verbindung mehr besteht. Der Ausschleusvorgang an sich wird dadurch nicht nur beschleunigt, sondern erfolgt auch wesentlich sicherer da das kritische Verhalten eines Bügelhakens beim Ausheben aus dem Förderträger von der schaltbaren Weiche losgelöst ist.

Eine Förderträger zur Verwendung in dem erfindungsgemäßen Verfahren mit einer Vielzahl von einzelnen aus zwei vertikal beabstandeten Strängen bestehenden Förderelementen, dessen oberen Stränge jeweils über Gelenkkupplungen (DE-PS 40 03 431) miteinander verbunden sind, zeichnet sich dadurch aus, daß die unteren Stränge durch ein Hohlprofil gebildet werden und benachbarte Förderelemente über flexible Teilstücke verbindbar sind, die im Profil des einen Förderelements fest und in dem Profil des benachbarten Förderelements lose gelagert sind.

Durch diese Ausbildung ist der Förderstrang und damit die Förderanlage raumgelenkig. Die Griffeinheiten können deshalb über mehrere Ebenen transportiert werden. Beim Befahren einer Steigungsstelle muß sich beim Übergang aus der horizontalen Ebene in eine darüberliegende der untere Strang der Förderträger verlängern, wenn der Förderstrang endlos ausgebildet sein soll. Dadurch, daß die Teilstücke lose in dem einen Hohlprofil gelagert sind, können diese aus dem Hohlprofil entsprechend der notwendigen Länge herausgezogen werden, bzw. beim Übergang von einer horizontalen oberen Ebene in eine darunterliegende Ebene entsprechend in das Hohlprofil eingeschoben werden. Die Flexibilität der Teilstücke gewährleistet, daß auch enge Kurvenradien durchfahren werden können.

Zum Vereinzeln von auf mit Bügelhaken versehenen Bügeln hängendem Fördergut ist aus der DE-OS 42 44 219 eine horizontal angeordnete und rotierend angetriebene Spindel mit unterschiedlicher Steigung und dadurch unterschiedlich breiten Nuten, in denen die Bügelhaken transportiert werden, bekannt. Dadurch ist es möglich, den jeweils von der Spindel erfaßten Bügel rasch von der Staustrecke wegzuführen, so daß sich der ursprünglich im Bereich der Staustrecke geringe Abstand zwischen den einzelnen Bügelhaken entsprechend vergrößert und die gewünschte Vereinzelung erzielbar ist.

Diese Vereinzelungsvorrichtung kann nicht unbedingt verwendet werden, wenn Kleiderbügel mit Haken unterschiedlichen Drahtdurchmessers benutzt werden.

Um die Flexibilität der Hängeförderanlage und damit den Grad der Universalität des erfindungsgemäßen Verfahrens zu erhöhen und den konstruktiven Aufwand an der Hängeförderanlage zu reduzieren, der notwendig ist, wenn Bügelhaken mit unterschiedlichem Drahtdurchmesser gefahren werden und insbesondere dann, wenn diese in einer einzelnen Griffeinheit zusammengefaßt sind, wird weiterhin erfindungsgemäß eine gattungsgemäße Vorrichtung dadurch fortgebildet, daß die Breite der kleinsten Nut maximal dem Drahtdurchmesser des kleinsten zu transportierenden Bügelhakens entspricht.

Durch diese Ausbildung der Vereinzelungsvorrichtung ist sicher gewährleistet, daß der kleinste Bügelhaken sofort sicher erfaßt und über die Spindel nach vorn transportiert wird, um die Griffeinheit schnell von der Staustelle wegzufördern. Durch die breiter werdenden Nuten wird die Griffeinheit nach vorne gezogen.

Die am Ende einer Griffeinheit befindlichen Bügel können dabei über die kleineren Nuten hinweggezogen werden, so daß die Durchsatzgeschwindigkeit der Spindel nicht mehr direkt abhängig ist von der Breite der kleinsten Nut, sondern von der Anzahl der Bügelhaken, die sich bereits in den breiteren Nuten, das heißt also im Bereich größerer Spindelsteigung befindet.

Insbesondere vorteilhaft ist es, wenn die durch die unterschiedliche Steigung gebildeten Nuten in ihrer Breite so abgestuft sind, daß zu jedem transportierenden Bügelhaken unterschiedlicher Drahtdurchmesser eine entsprechend breite Nut vorgesehen ist. Dadurch wird die Zuverlässigkeit der Vereinzelungsvorrichtung gesteigert.

Zum Einschleusen der mit Bügelhaken versehenen Bügel in den Förderbereich einer Hängeförderanlage ist eine Vorrichtung bekannt, bei der das Fördergut stetig angefördert und gegebenenfalls in einem Aufgabebereich aufgestaut und gesteuert einzuschleusen ist, wobei zum Aufstauen eine erste angetriebene Spindel mit flacher Steigung und zum Einschleusen eine hierzu koaxial verlaufende zweite angetriebene Spindel mit größerer Steigung vorgesehen ist. Beide Spindeln werden jeweils durch einen Elektromotor angetrieben, wobei die Motoren zueinander synchronisiert sein müssen, was zusätzlich zu dem konstruktiven Aufwand, der mit zwei Motoren verbunden ist, auch noch den Steuerungsaufwand erhöht.

Um das mit dem erfindungsgemäßen Verfahren notwendigerweise verbundene Einschleusen des Fördergutes in den Förderbereich zu verbessern und die bekannte Vorrichtung konstruktiv zu vereinfachen wird erfindungsgemäß weiterhin vorgeschlagen, daß bei einer gattungsgemäßen Vorrichtung zum Einschleusen beide Spindeln von demselben Motor angetrieben werden, wobei die erste Spindel als Hohlwelle ausgeführt ist, durch die die Antriebswelle der zweiten Spindel hindurchgeführt ist, daß die eine Spindel zum kontinuierlichen Antrieb direkt mit dem Motor und die andere Spindel zum gesteuerten Antrieb über eine schaltbare Kupplung mit dem Motor verbunden ist.

Die kontinuierlich angetriebene Spindel dient zum Aufstauen der Bügel. Solange die koaxial hierzu verlaufende zweite Spindel nicht umläuft, wird das Fördergut an der Übergangsstelle der beiden Spindeln aufgestaut. Durch Zuschalten der zweiten Spindel über die Kupplung können die gestauten Griffeinheiten in der gewünschten Anzahl auf die Spindel aufgezogen und bis an die Übergabestelle in den Förderbereich transportiert werden. Durch Abschalten dieser Spindel ist es nun möglich, daß die Griffeinheit vor der Aufgabe in den Förderbereich solange in Warteposition verbleibt, bis eine genügend breite Lücke im Förderbereich vorhanden ist. Die Spindel wird dann über die Kupplung wieder zugeschaltet und die Griffeinheit eingeschleust. Dabei ist es auch möglich, eine Mehrzahl von Griffeinheiten hintereinander zuzuführen. Der Abstand zwischen den Griffeinheiten kann durch Ausschalten der Spindel für eine bestimmte Zeit reguliert werden.

Denkbar ist auch, die zum Stauen vorgesehene Spindel getaktet anzutreiben und die der Vereinzelung dienende Spindel kontinuierlich anzutreiben. Wenn die Stauspindel steht, wird der Vereinzelungsspindel kein Fördergut zugeführt. Dabei muß aber in Kauf genommen werden, daß das einzuschleusende Fördergut nicht unmittelbar an die Einschleusstelle vor dem Förderbereich transportiert werden kann, sondern bis zum Zeitpunkt der Einschleusung noch über die Länge der Spindel gefördert werden muß. Entsprechend ist die Steuerung der Hängeförderanlage auszulegen.

Um ein Nachlaufen der Zuführspindel zu vermeiden, nachdem sie über die Kupplung vom Motor getrennt wurde, ist bei einer bevorzugten Ausführungsform die zweite Spindel mit ihrem hinteren Ende in der Hohlwelle der ersten Spindel gelagert und abbremsbar. Damit ist sichergestellt, daß die Griffeinheit unmittelbar dann stehenbleibt, wenn ausgekuppelt worden ist. Insbesondere vorteilhaft ist es, wenn die zweite Spindel an ihrem vorderen Ende hierzu eine Bremse aufweist.

Dazu ist die zweite Spindel am vorderen Ende hohl ausgebildet und nimmt die zweiteilige zylindrische Bremse hierin auf, wobei das eine Teil als Bremselement permanent auf die zylindrische Innenfläche der Spindel einwirkt und das andere Teil außerhalb der Spindel befestigt ist, und das Bremselement in einer an dessen Form angepaßten Ausnehmung des anderen Teils aufgenommen ist und zwischen beiden Teilen mindestens eine Druckfeder angeordnet ist.

Vorzugsweise sind beide Teile der Bremse mit mehreren sich entsprechenden, im montierten Zustand der Bremse gegenüberliegenden Bohrungen versehen, in der jeweils eine Druckfeder angeordnet ist.

Damit die Griffeinheiten erfindungsgemäß an jeder Ausschleusstelle angehoben werden können, unabhängig davon, ob sie tatsächlich ausgeschleust werden sollen oder nicht, wird eine Vorrichtung zum Ausschleusen der Bügelhaken aus dem Förderbereich auf eine Rutschstange oder dergleichen weiterhin erfindungsgemäß dadurch fortgebildet, daß eine parallel zum umlaufenden Förderstrang angeordnete zweiteilige Weiche mit einem in Transportrichtung ansteigenden, die Bügelhaken vom Förderelement abhebenden ersten Teilstück und einem an dessen hinterem Ende horizontal schwenkbar befestigten, in Transportrichtung abfallenden, die Bügelhaken gegebenenfalls auf das Förderelement zurückführenden zweiten Teilstück versehen, wobei die Weiche so dicht neben den sie passierenden Förderelementen angeordnet ist, daß mit ihrem Anfangsbereich der Bügelhaken in seinem geschlossenen Krümmungsteil ergreifbar ist und das Teilstück zur Verbindung mit der Rutschstange oder dergleichen aus der Transportrichtung herausschwenkbar ist.

Wie auf einer Rampe werden die einzelnen Bügelhaken der Griffeinheiten an jeder Ausschleusstelle aus dem Förderträger herausgehoben und auf der Weiche geführt, wobei der Vorschub der Griffeinheiten über den Förderträger erfolgt. Soll die Griffeinheit nicht ausgeschleust werden, gleiten die Bügelhaken über den hinteren (zweites Teilstück) Teil wieder in den Förderträger zurück. Soll hingegen die Griffeinheit ausgeschleust werden, schwenkt der hintere Teil seitlich nach außen und verbindet - zum Schließen der Ausschleusstelle - die Weiche mit einer Rutschstange. Die Bügelhaken rutschen dann an der Rutschstange in den Abgabebereich.

Bei einem weiteren Ausführungsbeispiel der Ausschleusvorrichtung ist eine parallel zum umlaufenden Förderstrang angeordnete Weiche mit einem ersten in Transportrichtung ansteigenden, die Bügelhaken vom Förderelement abhebenden ersten Teilstück und einem sich daran anschließenden in Transportrichtung abfallenden, die Bügelhaken gegebenenfalls auf das Förderelement zurückführenden zweiten Teilstück vorgesehen. Außerdem ist ein gelenkig an der Rutschstange oder dergleichen befestigter auf oder an das erste Teilstück schwenkbarer Bügel, zur Herstellung einer Verbindung zwischen der Weiche und der Rutschstange oder dergleichen vorgesehen, wobei die Weiche so dicht neben dem sie passierenden Förderelement angeordnet ist, das mit ihrem Anfangsbereich der Bügelhaken in seinem geschlossenen Krümmungsteil ergreifbar ist.

Anhand einer Zeichnung und mit Hilfe einiger Ausführungsbeispiele soll die Erfindung nachfolgend näher erläutert werden. Es zeigt:
- Figur 1 -: die schematische Darstellung einer Hängeförderanlage in Draufsicht;
- Figur 2 -: ein Blockdiagramm des Förderablaufs;
- Figur 3 -: die Teildarstellung einer Förderanlage in Seitenansicht;
- Figuren 3a und 3b -: Einzelheiten der Förderträger in vergrößerter Dar- stellung;
- Figur 4 -: zwei benachbarte Förderelemente in einer horizontalen Förderstrecke;
- Figur 5 -: zwei benachbarte Förderelemente beim Übergang einer Steigungsstrecke in eine horizontale Förderebene;
- Figur 6 -: den Schnitt entlang der Linie VI-VI nach Figur 4;

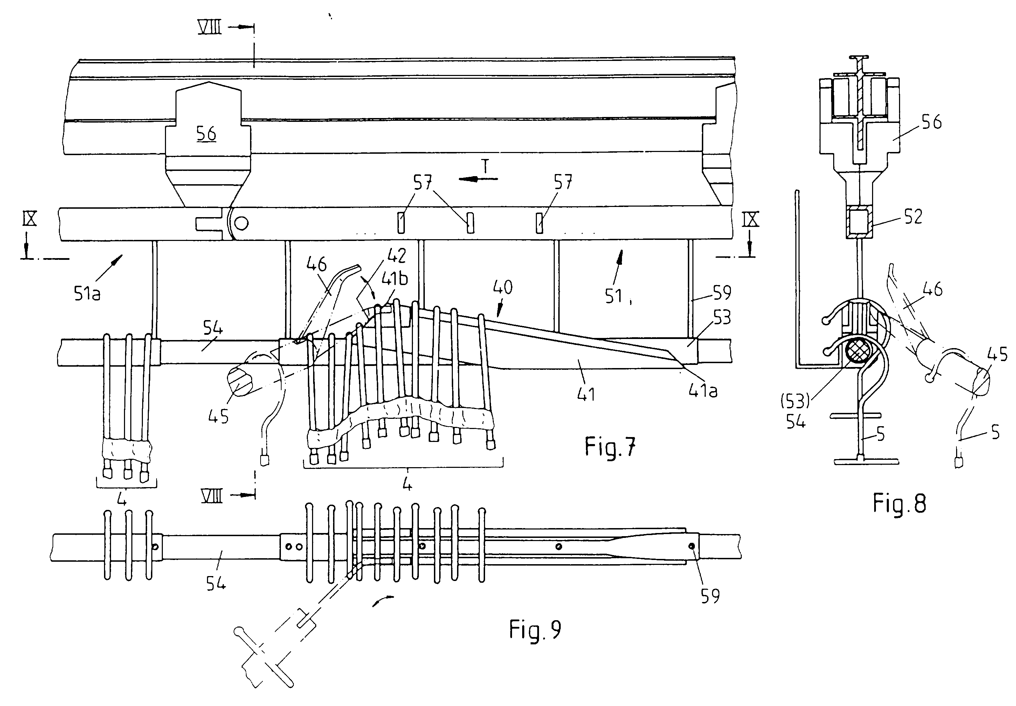

- Figur 7 -: eine Weiche zum Ausschleusen der Griffeinheiten aus der Förderstrecke in Seitenansicht;
- Figur 8 -: den Schnitt entlang der Linie VIII-VIII gemäß Figur 7;
- Figur 9 -: die Draufsicht auf die Weiche gemäß Figur 7;
- Figur 10 -: ein weiteres Ausführungsbeispiel einer Weiche zum Ausschleusen der Griffeinheiten;
- Figur 11 -: die Draufsicht auf die Weiche gemäß Figur 10;
- Figur 12 -: den Schnitt entlang der Linie XII-XII nach Figur 10;
- Figur 13 -: die Vorrichtung zum Einschleusen der Griffeinheiten in den Förderbereich in Seitenansicht;
- Figur 14 -: die Ansicht der Einschleusvorrichtung gemäß Figur 13 nach Sichtpfeil XIV;
- Figur 15 -: die Vorrichtung gemäß Figur 13 im Teilschnitt;

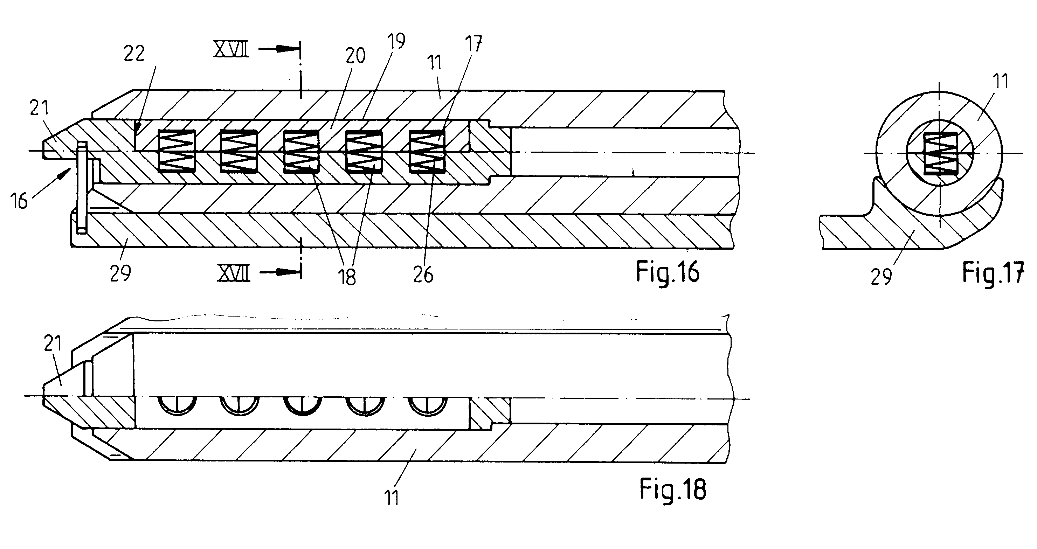

- Figur 16 -: die Bremse in Schnittdarstellung;
- Figur 17 -: den Schnitt entlang der Linie XVII-XVII nach Figur 16;
- Figur 18 -: die Draufsicht auf die Bremse gemäß Figur 16 im Teilschnitt;
- Figur 19 -: eine Vereinzelungsvorrichtung für die Griffeinheiten.

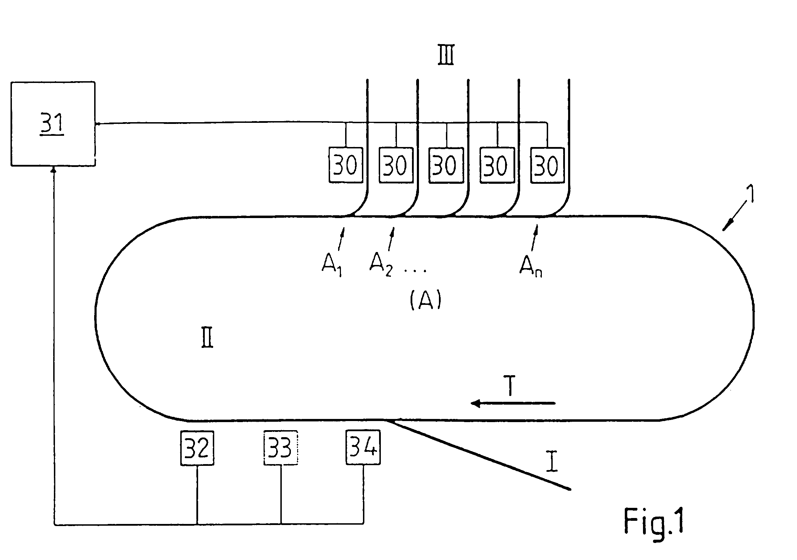

Figur 1 zeigt eine Prinzipskizze einer Hängeförderanlage 1. Vom Aufgabebereich I wird das Fördergut in den Förderbereich II eingeschleust und von dort in einen Abgabebereich III transportiert, wobei eine Vielzahl von Ausschleusstellen A, nämlich A₁,A₂,...,Aₙ zum Abgabebereich III führen. Jede Ausschleusstelle A₁,A₂,...,Aₙ ist mit einer Abgabesteuerung 30 verbunden, die unter anderem die Öffnungszeit der Weiche 40 regelt, wie nachfolgend noch näher erläutert werden wird. Die einzelnen Abgabesteuerungen 30 stehen mit einer zentralen Steuereinheit 31 in Verbindung, über die der gesamte Verfahrensablauf koodiniert wird. Eine Vorrichtung 32 zur Messung der Länge der in dem Förderbereich II befindlichen Fördergüter, insbesondere der Griffeinheiten 4, ist parallel zum Förderstrang angeordnet und ebenfalls mit der zentralen Steuereinheit 31 verbunden.

Weiterhin kann parallel zum Förderstrang der Hängeförderanlage 1 eine Identifikationseinrichtung 33 vorgesehen sein, über die das entsprechend kodierte Fördergut so identifiziert wird, daß es an der richtigen Ausschleusstelle A aus dem Förderbereich ausgeschleust wird. Über eine Takterzeugungsvorrichtung 34, die ebenso wie die Identifikationsvorrichtung 33 mit der zentralen Steuereinheit 31 verbunden ist, erfolgt die Wegverfolgung des Fördergutes und damit die Steuerung des Ausschleusens.

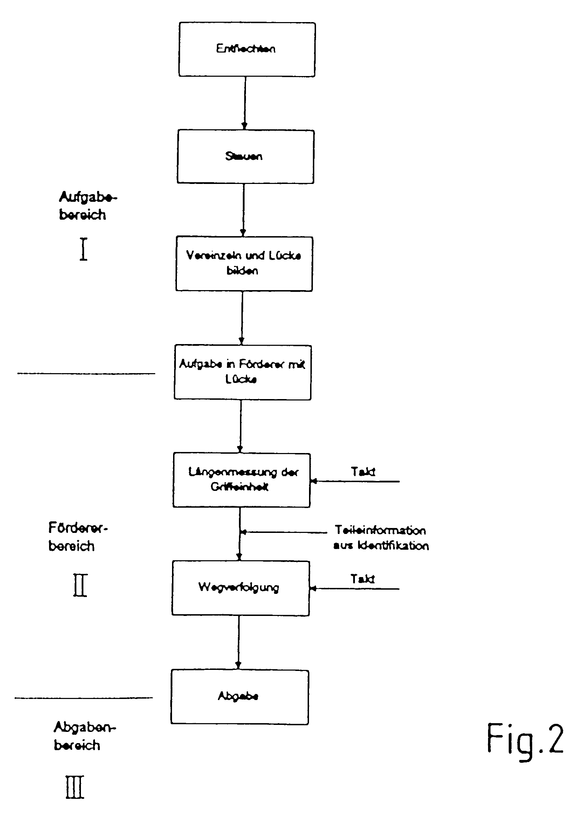

In der Förderanlage kann einzelnes Fördergut 4' ebenso wie zu Griffeinheiten 4 zusammengefaßte Gruppen einzelner Fördergüter 4' durcheinander gefördert werden. Wie das in Figur 2 dargestellte Flußdiagramm zeigt, werden hierzu zunächst im Aufgabebereich I die angeförderten Bügelhaken 5 entflochten, sofern sie übereinanderverkreuzt sein sollten. Wichtig ist dabei, daß zumindest die Haken 5 eines einzelnen Fördergutes 4' entflochten werden. Etwa gekreuzte Bügelhaken 5 in einer Griffeinheit 4 sind relativ unkritisch. Eine Entflechtungsvorrichtung, wie sie in der DE 195 14 604.2 beschrieben ist, kann sowohl einzelne Bügelhaken 5 als auch Griffeinheiten 4 sicher entflechten. Nach dem Entflechten wird das Fördergut 4,4' im Aufgabebereich 1 aufgestaut. Nach dem Stauen wird das Fördergut 4,4' vereinzelt und zwischen ihnen eine Lücke gebildet. Anschließend erfolgt ein Transport des Fördergutes 4,4' unmittelbar vor den Förderbereich II. Sofern im Förderstrang der Hängeförderanlage 1 eine ausreichend große Lücke vorhanden ist, wird das unmittelbar vor dem Förderstrang wartende Fördergut 4,4' in den Förderbereich II eingegeben.

Im Förderbereich II wird über den Takterzeuger 34 ein Takt erzeugt, der als Maß für Längenabmessungen verwendet wird, die mit der Förderanlage 1 zusammenhängen. Hierzu sind die einzelnen Förderträger beispielsweise mit äquidistanten Markierungen 57 versehen, die über eine nichtgezeigte Lichtschranke im Takterzeuger 34 erkennbar sind. Die Länge der Förderstrecke ist folglich durch eine bestimmte Anzahl von Takten definiert. Diese Anzahl richtet sich nach dem Abstand zwischen den einzelnen Markierungen 57. Ebenso steht die Strecke zwischen dem Aufgabebereich I an der Aufgabestelle und dem Abgabebereich III an der Ausschleusstelle A mit einer bestimmten Anzahl zu zählender Takte in Verbindung. Die Takte werden durch die umlaufenden Förderelemente 50,50a;51,51a erzeugt und sind folglich völlig unabhängig von der Fördergeschwindigkeit. Über die Längenmeßeinrichtung 32 kann durch Zählung der Takte, die erzeugt werden, solange eine Griffeinheit 4 bzw. ein einzelnes Fördergut 4' die Einrichtung 32 passiert, die Länge ermittelt werden. Über die ermittelte Teileinformation aus der Identifikationsvorrichtung 33 über das Fördergut 4,4' kann in der zentralen Steuereinheit 31 bestimmt werden, an welcher Ausschleusstelle A₁,A₂,...Aₙ wieder die Ausschleusung erfolgen soll. Zu welchem Zeitpunkt das Fördergut 4,4' eine Meßstelle (Meßeinrichtung 32) passiert hat, steht fest. Der Weg von dieser Meßstelle zur Ausschleusstelle A steht ebenfalls fest. Durch laufendes Zählen des erzeugten Taktes kann in der zentralen Steuereinheit 31 ermittelt werden, wann das Fördergut 4,4' an seiner vorgesehenen Abgabestelle A eintrifft. Durch Aktivierung der Abgabesteuerung 30 wird die Ausschleusstelle geöffnet, so daß das Fördergut in den Abgabebereich III ausgeschleust wird. Dabei bleibt die Ausschleusstelle genau entsprechend der Länge des auszuschleusenden Förderguts 4,4' geschlossen. Hierzu wird vorteilhafterweise die in der Längenmeßeinrichtung 32 detektierte Länge verwendet. Ebenso kann aber auch an der Ausschleusstelle eine Lichtschranke oder ähnliches vorgesehen sein, die mit der zentralen Steuereinheit 31 verbunden ist und erkennt, wenn das hintere Ende des Förderguts 4,4' die Ausschleusstelle passiert hat.

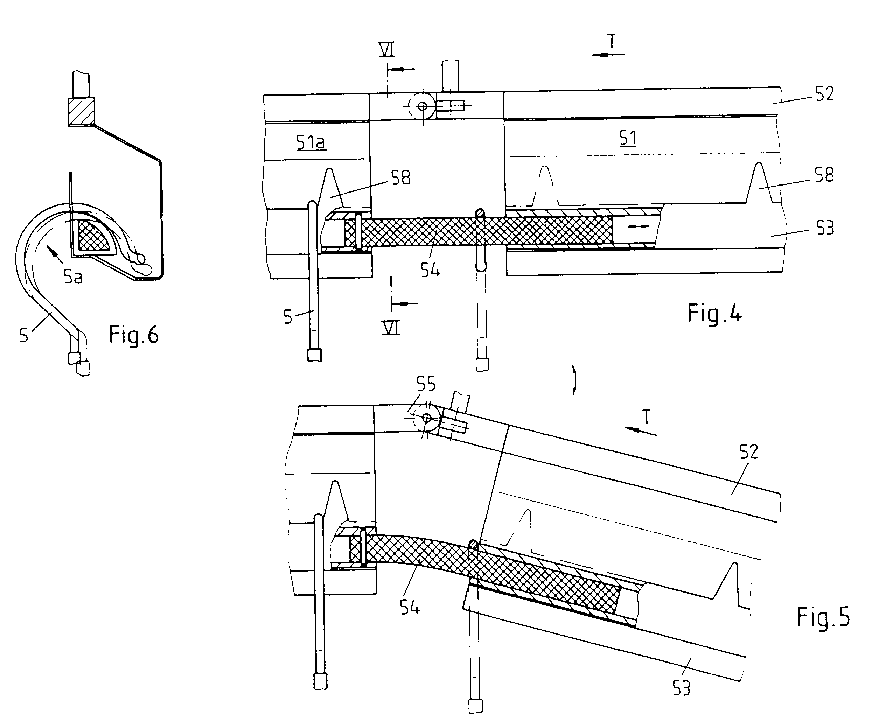

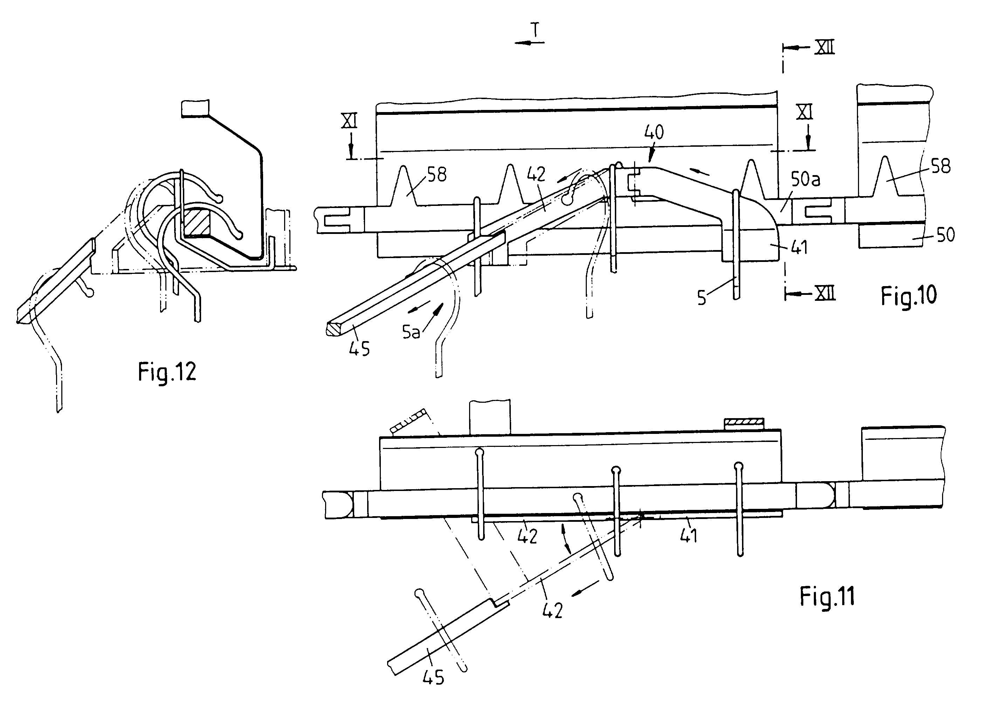

Der endlos umlaufende Förderstrang des Förderbereichs II wird gebildet durch Förderelemente 50,50a (Figur 10) bzw. 51,51a (Figur 4). Die Förderelemente 50,50a;51,51a sind jeweils identisch aufgebaut und vorzugsweise mit einer Mehrzahl von in gleichem Abstand angeordneten Markierungen 57 versehen. Die Förderelemente 51,51a bestehen aus dem oberen Strang 52 und dem unteren Strang 53. Der obere, die Markierungen 57 tragende Strang 52 trägt außerdem die Führungsrollen 56 der Förderelemente 51,51a, mit dem diese entlang einer an der Hallendecke aufgehängten Schiene 60 fahren. Im oberen Strang 52 sind die Förderelemente 51,51a über bekannte Gelenkkupplungen 55 miteinander verbunden. Die Verbindung im unteren Strang 53 der Förderelemente 50,50a;51,51a erfolgt über ein flexibles Teilstück 54, das vorzugsweise aus einem Kunststoff (Vulkollan) besteht. Über vertikale Streben 59 ist der obere Strang 52 mit dem unteren Strang verbunden.

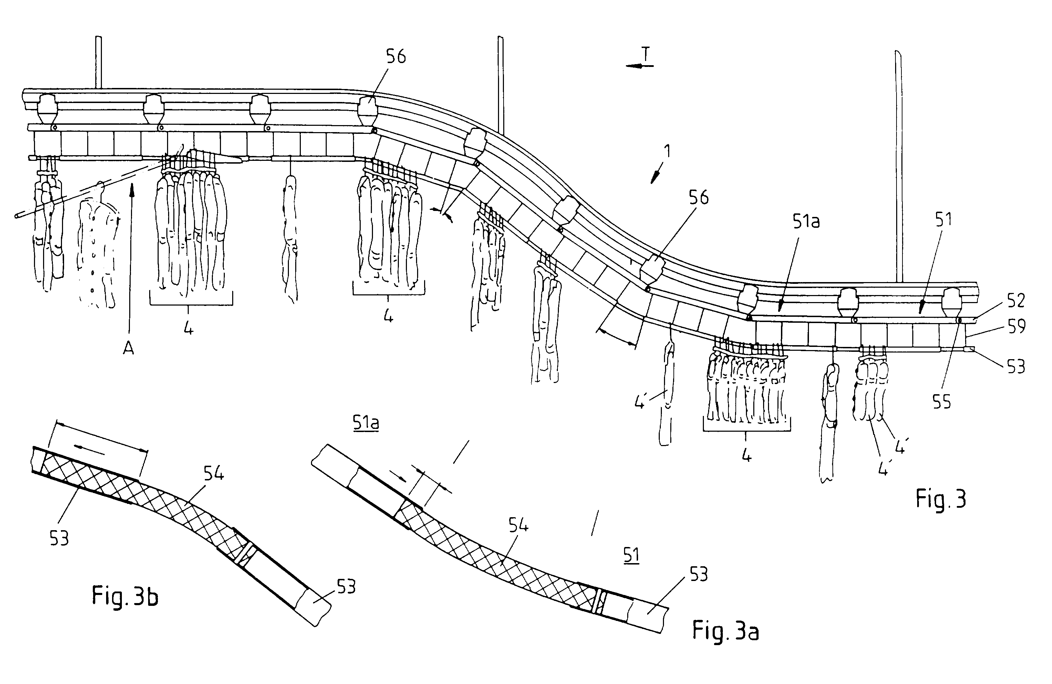

Wie Figuren 3a und 3b zeigen, ist der untere Strang 53 als Hohlprofil ausgebildet. Das flexible Teilstück 54 ist mit seinem einen Ende im Hohlprofil des Förderelements 51 fest eingelassen, beispielsweise geklebt oder geschraubt bzw. genietet und im anderen Förderelement 51a lose eingesteckt. Das Teilstück 54 kann folglich in das Hohlprofil des Förderelementes 51a eintauchen oder aus diesem weiter herausgezogen werden. Bei Bergfahrt (Figur 3a) wird das Teilstück 54 herausgezogen, bei Überleitung von der Bergfahrt in einen horizontalen Bereich (Figur 3b) schiebt sich das Teilstück 54 weiter in den unteren Strang 53 des Förderelements 51a ein.

Der untere Strang 53 ist mit nach oben weisenden zackenartigen Mitnehmern versehen, die dazu dienen, die auf dem unteren Strang 53 aufliegenden Bügelhaken sicher in Transportrichtung T zu schieben, wenn Steigungsstrecken durchfahren werden, insbesondere wenn - wie nachfolgend noch näher erläutert werden wird, die Abgabestelle passiert wird. Die Mitnehmer 58 können ersetzt werden durch die Streben 59 oder kumulativ zu diesen bestehen.

### Vereinzeln der Bügel

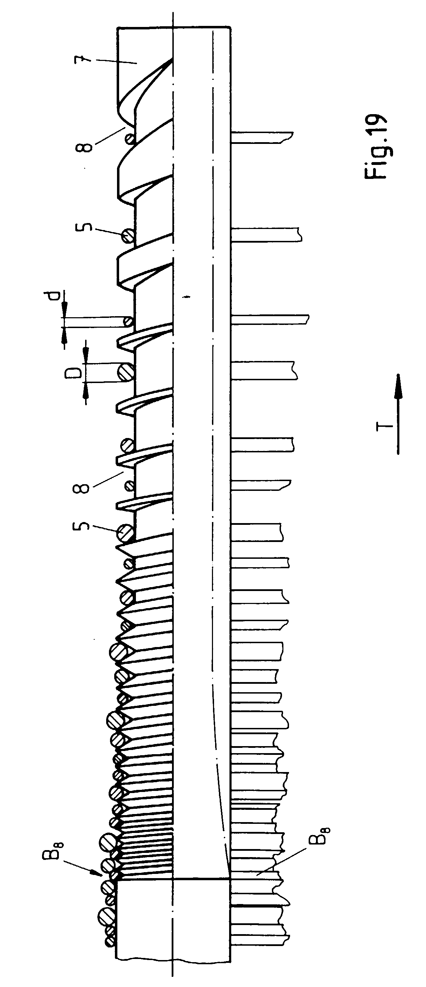

Zum Vereinzeln der Bügel bzw. der Bügelhaken 5 oder des Förderguts 4,4' ist eine umlaufend angetriebene Spindel 7 vorgesehen, mit einer sich über ihre Länge ändernden Steigung, so daß in Transportrichtung T unterschiedlich breite Nuten 8 ausgebildet sind durch und in denen die Bügelhaken 5 transportiert werden. Die Breite B₈ der Nuten 8 nimmt in Transportrichtung zu. Die kleinste Steigung und damit die kleinste Nut 8 ist so breit, daß sie dem kleinsten Durchmesser d eines zu vereinzelnden Bügelhakens 5 entspricht. Wie Figur 19 zeigt nimmt der Abstand zwischen den Bügelhaken 5 in Transportrichtung T zu. Zu einer Griffeinheit 4 zusammengefaßtes Fördergut 4' wird durch die vorderen Bügelhaken 5 schnell transportiert, so daß die hinteren Bügelhaken 5 der Griffeinheit 4 über die Nuten 8 hinweggezogen werden. Die Spindel 7 ist vorzugsweise aus Kunststoff gefertigt.

### Stauen und Vereinzeln

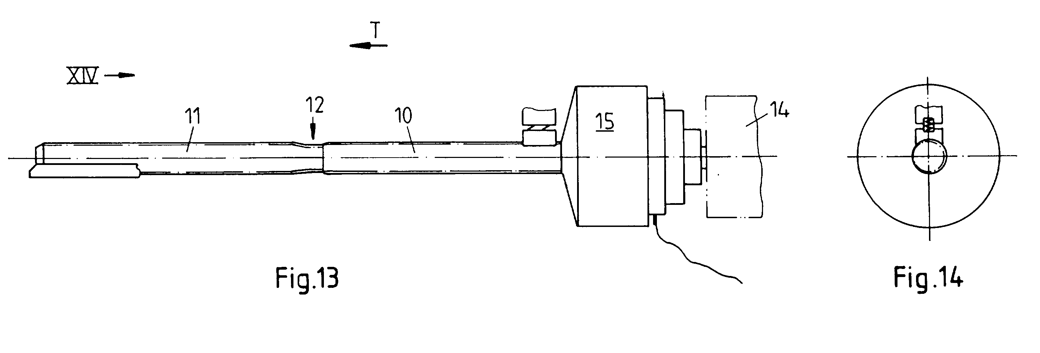

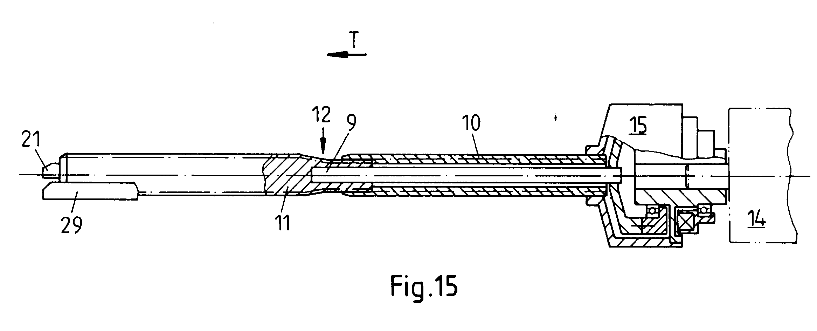

Zum Aufstauen und anschließenden Vereinzeln bzw. Lücke bilden zwischen den Griffeinheiten 4 sind, wie den Figuren 13 bis 15 entnehmbar ist, zwei Spindeln 10,11 koaxial hintereinander angeordnet. Die in Transportrichtung T vordere Spindel 10 ist mit einer kleineren Steigung versehen, die hintere Spindel 11 mit einer größeren Steigung. Vorzugsweise ist die Spindel 11 analog zur Spindel 7 ausgebildet. Die Spindel 10 ist als Hohlwelle ausgebildet und dient gleichzeitig zur Lagerung der Spindel 11. Die Spindel 10 ist direkt mit dem Motor 14 verbunden. Über eine Kupplung 15 ist die Spindel 11 mit dem Motor 14 verbunden. Hierzu führt eine mit der Spindel 11 verbundene Welle 9 durch die Hohlwelle der Spindel 10 und endet in der Kupplung 15. Durch Schalten der Kupplung 15 kann die Spindel 11 angetrieben oder stillgesetzt werden.

Wenn die Spindel 11 still steht und sich die Spindel 10 dreht, werden die Griffeinheiten 4 an der mit 12 bezeichneten Übergangsstelle aufgestaut. Zum Vorfördern der Griffeinheiten 4 zur Einschleusstelle wird die Spindel 11 zugeschaltet und die vorderen Bügelhaken 5 von der Staustelle 12 weggezogen. Die vordere Lagerstelle 29 der Spindel 11 ist so ausgebildet, daß die Bügelhaken 5 zumindest teilweise über sie hinweggleiten können. Das in der Lagerung 29 befindliche Ende der Spindel 11 endet unmittelbar an der Einschleusstelle.

Damit die vereinzelten Griffeinheiten 4 bzw. einzelnes Fördergut 4' definiert in den Förderbereich II eingeschleust werden kann, ist es notwendig, daß die Spindel 11 praktisch verzögerungsfrei stillgesetzt werden kann und nicht nachläuft. Hierzu ist im vorderen Ende der Spindel 11 eine Bremse 16 vorgesehen. Zur Aufnahme der Bremse 16 ist das in Transportrichtung T gesehen vordere Ende der Spindel 11 hohl gebohrt.

Die Bremse 16 besteht im wesentlichen aus dem Bremselement 20, das permanent auf die zylindrische Innenfläche 19 der hohl gebohrten Spindel 11 einwirkt und dem ebenfalls auf die zylindrische Innenfläche 19 einwirkenden Teil 21, das außerhalb der Spindel 11 an der Lagerung 29 befestigt ist. Beide Teile 20,21 sind mit fünf hintereinander liegenden Bohrungen 17,18 versehen, die sich bei zusammengebauter Bremse gegenüberliegen. In der durch die Bohrung 17,18 gebildeten Zylinderkammer stützt sich jeweils eine Druckfeder 26 ab, über die die Bremskräfte aufgebracht werden. Die sich gegen die zylindrische Innenfläche 19 der Welle 11 abstützenden Bremselemente 20,21 bewirken, daß die Spindel nachdem sie ausgekuppelt wurde nicht mehr nachläuft.

### Ausschleusen

An jeder Ausschleusstelle bzw. Abgabestelle A₁,A₂,...Aₙ ist eine Weiche 40 vorgesehen, die so ausgebildet ist, daß die Bügelhaken 5 jedes die Ausschleusstelle A passierenden Fördergutes aus dem Förderträger 50,50a;51,51a ausgehoben werden, unabhängig davon, ob die Griffeinheit 4 oder das einzelne Fördergut 4' ausgeschleust werden soll oder nicht. Hierzu ist die Weiche 40 mit einem vorderen Teilstück 41 versehen, das in Transportrichtung T ansteigt. An das Teilstück 41 schließt sich ein in Transportrichtung abfallendes zweites Teilstück 42 an. Die auf den Förderelementen 51,51a aufliegenden Bügelhaken 5 werden mittels der Streben 59 bzw. der Mitnehmer 58 auf dem ersten Teilstück 41 soweit hochgeschoben, daß sie von dem Strang 53 abgehoben werden. Sollen die Griffeinheiten 4, oder das Fördergut 4' nicht ausgeschleust werden, so bleibt der mit der Rutschstange 45 verbundene in vertikaler Richtung klappbare Bügel geöffnet, so daß die Bügelhaken an dem zweiten Teilstück 42 entlang wieder auf den unteren Strang 53 des Förderelements 51,51a zurückgleiten. Ist hingegen ein Ausschleusen der Griffeinheit 4 bzw. eines einzelnen Fördergutes 4' gewünscht, wird über die Abgabesteuerung 30 der klappbare Bügel 46 auf oder gegen die Weiche 40 geschwenkt, so daß die Bügelhaken 5 auf die Rutschstange 45 gleiten können, um in den Abgabebereich III zu gelangen.

Wie Figuren 10 und 11 zeigen, kann die Weiche auch so ausgebildet sein, daß das zweite Teilstück 42 schwenkbar am Ende 41b des in Transportrichtung T ansteigenden ersten Teilstücks 41 angeordnet ist. Solange keine Abgabe der Griffeinheiten 4 bzw. eines einzelnen Fördergutes 4' gewünscht ist, bleibt das hintere Teilstück 42 parallel zum Förderstrang geschwenkt. Die Bügelhaken 5 werden über die Mitnehmer 58 auf das erste Teilstück 41 hochgeschoben, so daß sie aus dem Förderelement 50 herausgehoben werden und gleiten am zweiten Teilstück 42 wieder herunter in das Förderelement 50 hinein. Durch Ausschwenken des zweiten Teilstücks 42 und verbinden mit der Rutschstange 45 können die Griffeinheiten 4 ausgeschleust werden. Nachdem eine Griffeinheit 4 ausgeschleust worden ist, schwenkt das Teilstück 42 wieder zurück, so daß nachfolgende Griffeinheiten 4, sofern sie nicht ausgeschleust werden sollen, wieder in das Förderelement 50 zurückgeführt werden. Entsprechend wird bei dem zuvor beschriebenen Ausführungsbeispiel der Weiche der klappbare Bügel 46 geöffnet.

### Bezugszeichenliste

- 1: Hängeförderanlage
- 4: Griffeinheit
- 4': einzelnes Fördergut
- 5: Bügelhaken
- 5a: geschlossener Krümmungsteil
- 6: Bügel
- 7: Spindel
- 8: Nut
- 9: Welle
- 10: Spindel
- 11: Spindel
- 12: Übergangsstelle
- 13: Antriebswelle
- 14: Motor
- 15: Kupplung
- 16: Bremse
- 17: Bohrung
- 18: Bohrung
- 19: zylindrische Innenfläche
- 20: Bremselement
- 21: Bremselement
- 22: Ausnehmung
- 26: Druckfeder
- 29: Lagerung
- 30: Abgabesteuerung
- 31: zentrale Steuereinheit
- 32: Längenmeßeinrichtung
- 33: Identifikationsvorrichtung
- 34: Takterzeuger
- 40: Weiche
- 41: erstes Teilstück
- 41a: vorderes Ende
- 41b: hinteres Ende
- 42: zweites Teilstück
- 43: erstes Teilstück
- 44: zweites Teilstück
- 45: Rutschstange
- 46: klappbarer Bügel
- 50: Förderelement
- 50a: Förderelement
- 51: Förderelement
- 51a: Förderelement
- 52: oberer Strang
- 53: unterer Strang
- 54: flexibles Teilstück
- 55: Gelenkkupplung
- 56: Rolle
- 57: Markierung
- 58: Mitnehmer
- 59: Streben
- 60: Schiene
- A: Ausschleusstelle
- B₈: Breite der Nut
- D: Drahtdurchmesser
- d: Drahtdurchmesser
- T: Transportrichtung
- I: Aufgabebereich
- II: Förderbereich
- III: Abgabebereich

## Patentansprüche

1. Verfahren zum Fördern von auf Bügel hängendem Fördergut, insbesondere Kleidungsstücke, wobei das Fördergut von einem Aufgabebereich (I) in einen Förderbereich (II) und von dort in einen Abgabebereich (III) transportiert wird, **gekennzeichnet, durch** folgende Schritte:
a) Bilden von Griffeinheiten (4) durch Zusammenfassen mehrerer einzelner Fördergüter (4') zu Gruppen gleicher oder unterschiedlicher Größe und Festlegen einer theoretischen Maximallänge für eine Griffeinheit (4),
b) Zählen eines im Förderbereich (II) erzeugten Taktes,
c) Aufstauen der Griffeinheiten im Aufgabebereich (I),
d) Vereinzeln der Griffeinheiten (4) zur Ausbildung definierter Abstände zwischen ihnen und Fördern der vereinzelten Griffeinheit (4) vor den Förderbereich (II),
e) Prüfen, ob im Förderbereich (II) eine ausreichend große Lücke zum Einschleusen der vorgeförderten Griffeinheit (4) vorhanden ist, unter Zugrundelegung der festgelegten Maximallänge und Zählen der Takte zur Bestimmung der Länge der Lücke,
f) Einschleusen der Griffeinheit (4) in die nächste ausreichend große Lücke im Förderbereich (II),
g) Festlegen des im Förderbereich (II) zurückzulegenden Weges der Griffeinheit (4),
h) Verfolgen des Weges jeder in den Förderbereich (II) eingeschleusten Griffeinheit (4) durch Fortzählen der Takte und
i) Ausschleusen der Griffeinheit (4) in den Abgabebereich (III), wenn die Taktzählung ergibt, daß der festgelegte Weg zurückgelegt wurde, indem die Anschleusstelle (A) geschlossen wird und in Abhängigkeit der Länge ausgeschleusten Griffeinheit (4) geschlossen bleibt.

2. Verfahren nach Anspruch 1, **dadurch gekennzeichnet, daß** jede Griffeinheit (4) kodiert und im Förderbereich (II) die Kodierung zum Zwecke der Zielzuordnung gelesen wird.

3. Verfahren nach Anspruch 1, **dadurch gekennzeichnet, daß** die Länge der eingeschleusten Griffeinheit (4) durch Zählen der Takte, während sie die Meßstelle (32) passiert, gemessen wird.

4. Verfahren nach Anspruch 1, **dadurch gekennzeichnet, daß** über einen Sensor festgestellt wird, ob die auszuschleusende Griffeinheit (4) die Ausschleusstelle (A) vollständig passiert hat, bevor sie geöffnet wird.

5. Verfahren nach Anspruch 1, **dadurch gekennzeichnet, daß** die Griffeinheiten (4) an jeder Ausschleusstelle (A₁...Aₙ) aus dem Förderträger (50,50a,51,51a) ausgehoben werden, unabhängig davon, ob die Griffeinheiten (4) an dieser Stelle auszuschleusen sind.

6. Verfahren nach Anspruch 1, **dadurch gekennzeichnet, daß** die Griffeinheiten (4) in einen geschlossenen umlaufenden Förderträger eingeschleust werden.

7. Förderträger zur Verwendung in dem Verfahren nach einem der Ansprüche 1 bis 6, mit einer Vielzahl von einzelnen Förderelementen (51,51a), bestehend aus zwei vertikal beabstandeten Strängen (52,53), wobei die oberen Stränge (52) der Förderelemente (51) jeweils über Gelenkkupplungen (55) miteinander verbunden sind, **dadurch gekennzeichnet, daß** die unteren Stränge (53) durch ein Hohlprofil gebildet werden und benachbarte Förderelemente (51,51a) über flexible Teilstücke (54) verbindbar sind, die im Profil des einen Förderelements (51) fest und in dem Profil des anderen benachbarten Förderelements (51a) lose gelagert sind.

8. Vorrichtung zum Vereinzeln von auf mit Bügelhaken (5) versehenen Bügeln (6) hängendem Fördergut, mit einer horizontal angeordneten und rotierend angetriebenen Spindel (7) mit unterschiedlicher Steigung und dadurch unterschiedlich breiten Nuten (8), in denen die Bügelhaken (5) transportiert werden, **dadurch gekennzeichnet, daß** die Breite (B₈) der kleinsten Nut (8) maximal dem Drahtdurchmesser (d) des kleinsten zu transportierenden Bügelhakens (5) entspricht.

9. Vorrichtung nach Anspruch 8, **dadurch gekennzeichnet, daß** die Steigung in Transportrichtung (T) wächst.

10. Vorrichtung nach Anspruch 8, **dadurch gekennzeichnet, daß** die Nuten (8) so in ihrer Breite abgestuft sind, daß zu jedem zu transportierenden Bügelhaken (5) unterschiedlicher Drahtdurchmesser (D;d) eine entsprechend breite Nut vorgesehen ist.

11. Vorrichtung zum Einschleusen von auf mit Bügelhaken (5) versehenen Bügeln (6) hängendem Fördergut in den Förderbereich (II) einer Hängeförderanlage (1), bei der das Fördergut stetig angefördert und gegebenenfalls in einem Aufgabebereich (I) aufgestaut und gesteuert einzuschleusen ist, wobei zum Aufstauen eine erste angetriebene Spindel (10) mit flacher Steigung und zum Einschleusen eine hierzu koaxial verlaufende zweite angetriebene Spindel (11) mit größerer Steigung vorgesehen ist, **dadurch gekennzeichnet, daß** beide Spindeln (10, 11) von demselben Motor (14) angetrieben werden, wobei die erste Spindel (10) als Hohlwelle ausgeführt ist, durch die die Antriebswelle (13) der zweiten Spindel (11) hindurchgeführt ist, daß die eine Spindel (10,11) zum kontinuierlichen Antrieb direkt mit dem Motor (14) und die andere Spindel (11,10) zum gesteuerten Antrieb über eine schaltbare Kupplung (15) mit dem Motor (14) verbunden ist.

12. Vorrichtung nach Anspruch 11, **dadurch gekennzeichnet, daß** die erste Spindel (10) direkt mit dem Motor (14) und die zweite Spindel über die Kupplung (15) mit dem Motor (14) verbunden ist.

13. Vorrichtung nach Anspruch 12, **dadurch gekennzeichnet, daß** die zweite Spindel (11) mit ihrem einen Ende in der Hohlwelle der ersten Spindel (10) gelagert und abbremsbar ist.

14. Vorrichtung nach Anspruch 13, **dadurch gekennzeichnet, daß** die zweite Spindel (11) an ihrem anderen Ende eine Bremse (16) aufweist.

15. Vorrichtung nach Anspruch 14, **dadurch gekennzeichnet, daß** die zweite Spindel (11) am vorderen Ende hohl ausgebildet ist und die zweiteilige zylindrische Bremse (16) hierin aufnimmt, wobei das eine Teil (20) als Bremselement permanent auf die Innenfläche (19) der Spindel (11) einwirkt und das andere Teil (21) außerhalb der Spindel (11) befestigt ist, daß das Bremselement (20) in einer an dessen Form angepaßten Ausnehmung (22) des anderen Teils (21) aufgenommen ist und zwischen beiden Teilen (20, 21) mindestens eine Druckfeder (26) angeordnet ist.

16. Vorrichtung nach Anspruch 15, **dadurch gekennzeichnet, daß** die Teile (20, 21) mit mehreren sich entsprechenden, im montierten Zustand der Bremse (16) gegenüberliegenden Bohrungen (17,18) versehen sind, in der jeweils eine Druckfeder (26) angeordnet ist.

17. Vorrichtung zum Ausschleusen von auf mit Bügelhaken (5) versehenen Bügeln (6) hängendem Fördergut aus dem Förderbereich (II) einer Hängeförderanlage (1) auf eine Rutschstange (45) o. dgl. gemäß dem Verfahren nach Anspruch 5, **gekennzeichnet durch** eine parallel zum umlaufenden Förderstrang angeordnete zweiteilige Weiche (40) mit einem in Transportrichtung (T) ansteigenden, die Bügelhaken (5) vom Förderelement (50,50a;51,51a) abhebenden ersten Teilstück (41) und einem an dessen hinterem Ende (41b) horizontal schwenkbar befestigten, in Transportrichtung (T) abfallenden, die Bügelhaken (5) ggf. auf das Förderelement (50) zurückführenden zweiten Teilstück (42), wobei die Weiche (40) so dicht neben den sie passierenden Förderelementen (50,50a;51,51a) angeordnet ist, daß mit ihrem Anfangsbereich (41a) der Bügelhaken (5) in seinem geschlossenen Krümmungsteil (5a) ergreifbar und das Teilstück (42) zur Verbindung mit der Rutschstange (45) o. dgl. aus der Transportrichtung (T) herausschwenkbar ist.

18. Vorrichtung zum Ausschleusen von auf mit Bügelhaken (5) versehenen Bügeln (6) hängendem Fördergut aus dem Förderbereich (II) einer Hängeförderanlage (1) auf eine Rutschstange (45) o. dgl. gemäß dem Verfahren nach Anspruch 5, **gekennzeichnet durch** eine parallel zum umlaufenden Förderstrang angeordnete Weiche (40) mit einem in Transportrichtung (T) ansteigenden, die Bügelhaken (5) vom Förderelement (50,50a;51,51a) abhebenden ersten Teilstück (43) und ein sich daran anschließendes, in Transportrichtung (T) abfallendes, die Bügelhaken (5) gegebenenfalls auf das Förderelement (50,50a;51,51a) zurückführendes zweites Teilstück (44) und einen gelenkig an der Rutschstange (45) o. dgl. befestigten auf oder an das erste Teilstück (43) schwenkbaren Bügel (46), zur Herstellung einer Verbindung zwischen der Weiche (40) und der Rutschstange (45) o. dgl., wobei die Weiche (40) so dicht neben den sie passierenden Förderelementen (50,50a) angeordnet ist, daß mit ihrem Anfangsbereich (43a) der Bügelhaken (5) in seinem geschlossenen Krümmungsteil (5a) ergreifbar ist.
